# EUROPEAN PATENT APPLICATION

(11) **EP 4 718 031 A1**
(43) Date of publication of application: **01.04.2026**
(21) Application number: 25204384.9
(22) Date of filing: 24.09.2025
(51) Int. Cl.: G01C 21/36

(54) **SYSTEM AND METHOD FOR AUTOMATED TRIP MANAGEMENT**

(30) Priority: 27.09.2024 IN 202411073244
(71) Applicant: Novus Hi-Tech Robotic Systemz Private Ltd., 122001 Gurgaon , Haryana (IN)
(72) Inventor: Kejriwal, Nishant, 122001 Gurgaon Haryana (IN); Kapuria, Anuj, 122001 Gurgaon Haryana (IN)
(74) Representative: Hafner & Kohl PartmbB

(57) **Abstract**

The present disclosure provides a system and a method for automated trip management. The system 100 and method 300 include a user device 112, a server 110, a communication unit 108, and a processing unit 104 to perform many tasks. The user device 112 receives at least one input from a user upon initiating a trip. Further, the processing unit 104 processes the at least one input to extract a plurality of information of the trip. Further, the communication unit 108 transmits the extracted plurality of information to the server 110 for creating a trip record. The server 110 generates an output data corresponding to the trip record and transmit the generated output data to a vehicle 102 associated with the trip via the communication unit 108.

## Description

### TECHNICAL FIELD

The present invention relates to an automated trip management system and method. More specifically, it pertains to a method for managing and optimizing trip-related information through automated processes for vehicles.

### BACKGROUND

In today's rapidly advancing technological landscape and with the increasing demand for seamless user experiences, effective management of travel and transportation has become more crucial than ever. With the proliferation of smartphones, connected vehicles, and sophisticated navigation systems, the travel industry has shifted towards more integrated and automated solutions. These innovations aim to enhance user experience, increase efficiency, and improve safety during travel.

Traditionally, trip management has involved a manual process where users have to input trip details into various systems and devices. This process often requires multiple steps, including entering departure and destination points, selecting routes, and adjusting settings based on preferences. Therefore, the conventional approaches present several challenges such as increased risk of error, time-consuming processes and ineffective communication, which potentially impacted the accuracy and timeliness of trip information.

Existing trip management systems typically involve standalone applications or devices that provide navigation and route information. While these systems have improved over time, they often lack integration and real-time adaptability. For instance, many navigation systems offer static route suggestions without considering real-time traffic conditions, personal preferences, or dynamic changes in the trip. Additionally, current systems may not effectively accommodate different types of inputs, such as voice commands or multimedia, limiting their usability and effectiveness.

US Patent 20220205802 A1 relates to a method, a system, and a computer program product for providing navigational assistance. The method comprises receiving speech input data from at least one user. The method may include determining, using a machine learning model, context data associated with the speech input data from the at least one user. The method further includes, determining, based on the context data, an output data for at least one user, wherein the output data comprises behavioral data associated with the context data. The method also includes, determining, based on speech input data and the context data, a time period to transmit the output data and providing the navigational assistance to the at least one user, based on the determined output data and the determined time period.

The above prior art discloses the system installed in commercial vehicles or public transport. This system has a microphone that receives commands from the user and navigates the vehicle as per the command and displays the navigation map on the display.

C.N. patent 117073683 A discloses a navigation processing method, device and equipment, and a medium, and relates to the field of data processing, in particular to the fields of artificial intelligence, intelligent transportation, and human-computer interaction. According to the specific implementation scheme, in the vehicle navigation driving process, a user intention position is obtained, by determining a route interval of the navigation route according to the navigation route of the vehicle, the user intention position and the current position of the vehicle, and obtaining a map of the route interval for display. The embodiment of the invention can improve the overall safety.

The above-cited prior art discloses the navigation driving process in which the user provides the voice or audio command and navigates the vehicle as per the given command. This system also includes the artificial Intelligence computing for sending the details to the server and the server recognizes the details and displays the map of the desired route.

None of the aforementioned arts includes a trip record creation by a server and transmission of output data of the trip record to a vehicle.

Furthermore, existing solutions frequently fail to deliver a fully integrated, automated approach that encompasses the entire trip management lifecycle, from initiation to execution. There is a clear need for an innovative system capable of automatically managing trip information with minimal user intervention, ensuring both accuracy and efficiency throughout the entire process.

The present invention addresses these challenges by offering a novel method for an automated trip management upon receiving the at least one input from a user, processing these inputs to extract relevant trip information, and seamlessly communicating this information to a server and subsequently to a vehicle. Such a system would provide users with a more comprehensive and intuitive experience, allowing for more efficient trip planning, real-time navigation updates, and personalized recommendations. This would not only enhance user satisfaction but also contribute to safer and more efficient travel.

### OBJECTIVES OF THE DISCLOSURE

A primary objective of the present disclosure is to provide an automated system that manages all aspects of a trip, from initiation through execution, thereby minimizing the need for manual intervention.

Another objective of the present disclosure is to provide the system that transmits the generated output data to the vehicle's infotainment module, integrating navigation, display, and entertainment functions for a cohesive user experience.

Another objective of this invention is to provide the system with options for language selection and adapt voice recognition capabilities based on a plurality of historical user data, enhancing interaction and accuracy.

Another objective of this invention is to provide the system that enables the server to analyze the plurality of historical data and predict potential delays or suggest alternative routes, improving trip efficiency and responsiveness.

Yet another objective of this invention is to generate comprehensive trip records based on the received information, providing a reliable reference for future use.

### SUMMARY OF THE DISCLOSURE

The following is a summary description of illustrative embodiments of the invention. It is provided as a preface to assist those skilled in the art to more rapidly assimilate the detailed design discussion which ensues and is not intended in any way to limit the scope of the claims which are appended hereto in order to particularly point out the invention.

An embodiment of the present invention relates to a system and a method for automated trip management. The system includes a user device, a processing unit, a communication unit, and a server.

In accordance with an embodiment of the present invention, the user device receives at least one input from a user upon initiating a trip. Further, the at least one input is anyone of a voice input, a video, a picture input, and/or a written input. The at least one input includes a trip initiation point, a vehicle identifier, a departure time, a departure location, a destination location, a language selection, a modification, a confirmation, a navigation, a feedback, an emergency, a trip cancellation, and others.

In accordance with an embodiment of the present invention, the at least one input is provided either directly by the user device or a switching means that is any one of a switch, a push button, a cluster placed on a vehicle.

In accordance with an embodiment of the present invention, the processing unit processes the at least one input to extract a plurality of information of the trip. Further, the communication unit transmits the extracted plurality of information to the server for creating a trip record. Further, the user device allows the user to confirm or modify the at least one input before finalizing the trip record creation on the server. Further, the communication unit is configured to automatically communicate the at least one input from a telematics unit to the server.

In accordance with an embodiment of the present invention, the server generates an output data corresponding to the trip record and transmits the generated output data to the vehicle associated with the trip via the communication unit.

In accordance with an embodiment of the present invention, the output data corresponding to the trip record includes a plurality of routes and their maps, a user details, a vehicle details, type of a plurality of goods placed inside the vehicle, a plurality of destination points information, and others.

In accordance with an embodiment of the present invention, the system further provides an option of selecting a preferred language for communication with the user so that the voice input is received and processed in the preferred language.

In accordance with an embodiment of the present invention, the processing unit adapts its voice recognition capabilities based on a plurality of historical data of the user preferences and speech patterns.

In accordance with an embodiment of the present invention, the server further analyzes the plurality of historical data to predict potential delays or an alternative route for the current trip.

According to another embodiment of the present invention, the method for automated trip management includes a user device, a processing unit, a communication unit, and a server.

In accordance with an embodiment of the present invention, in the first step, the user device receives at least one input from a user upon initiating a trip. Further, in the second step, the processing unit processes the at least one input to extract a plurality of information of the trip.

In accordance with an embodiment of the present invention, in the third step, the communication unit transmits the extracted plurality of information to the server for creating a trip record.

In accordance with an embodiment of the present invention, in the fourth step, the server generates an output data corresponding to the trip record. Further, in the last step, the communication unit transmits the generated output data to a vehicle associated with the trip.

In accordance with an embodiment of the present invention, the generated output is received by the vehicle in its infotainment module includes a navigation unit, a display unit, an entertainment unit, and among others.

These and other aspects herein will be better appreciated and understood when considered in conjunction with the following description and the accompanying drawing.

It should be understood, however, that the following descriptions are given by way of illustration and not of limitation. Many changes and modifications may be made within the scope of the invention herein without departing from the spirit thereof. The foregoing objectives are attained by employing the system and the method for automated trip management for providing a seamless and safe driving experience to the user.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
FIG. 1 illustrates a system 100 for automated trip management, according to an embodiment of a present invention;
Fig. 2 is a flowchart 200 illustrating a method for automatically creating a trip record based on at least one input provided by a driver, according to an exemplary embodiment of the present invention; and
Fig. 3 is a flow chart illustrating a method 300 for automated trip management, according to another embodiment of the present invention.

It should be noted that the accompanying figure is intended to present illustrations of a few examples of the present disclosure. The figure is not intended to limit the scope of the present disclosure. It should also be noted that the accompanying figure is not necessarily drawn to scale.

### DETAILED DESCRIPTION

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of elements or steps but not the exclusion of any other element or step or group of elements or steps.

The term "including" is used to mean "including but not limited to". "Including" and "including but not limited to" are used interchangeably. The accompanying drawing is used to help easily understand various technical features and it should be understood that the alternatives presented herein are not limited by the accompanying drawing. As such, the present disclosure should be construed to extend to any alterations, equivalents and substitutes in addition to those which are particularly set out in the accompanying drawing. Although the terms first, second, etc. may be used herein to describe various elements, these elements should not be limited by these terms. These terms are generally only used to distinguish one element from another.

Conditional language used herein, such as, among others, "can," "may," "might," "e.g.," and the like, unless specifically stated otherwise, or otherwise understood within the context as used, is generally intended to convey that certain alternatives include, while other alternatives do not include, certain features, elements and/or steps. Thus, such conditional language is not generally intended to imply that features, elements and/or steps are in any way required for one or more alternatives or that one or more alternatives necessarily include logic for deciding, with or without other input or prompting, whether these features, elements and/or steps are included or are to be performed in any particular alternative. The terms "comprising," "including," "having," and the like are synonymous and are used inclusively, in an open-ended fashion, and do not exclude additional elements, features, acts, operations, and so forth. Also, the term "or" is used in its inclusive sense (and not in its exclusive sense) so that when used, for example, to connect a list of elements, the term "or" means one, some, or all of the elements in the list.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain alternatives require at least one of X, at least one of Y, or at least one of Z to each be present.

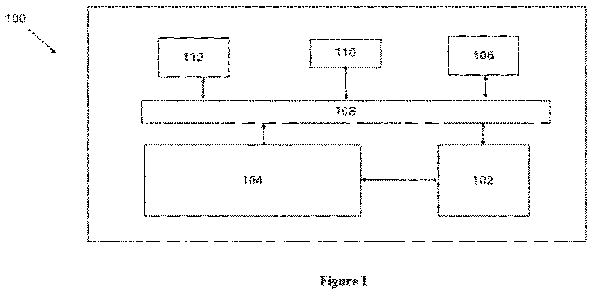

FIG. 1 illustrates a system 100 for automated trip management, according to an embodiment of a present invention. The system 100 includes a user device 112, a processing unit 104, a communication unit 108, and a server 110.

In accordance with an embodiment of the present invention, the user device 112 receives at least one input from a user upon initiating a trip. Further, the at least one input is anyone of a voice input, a video, a picture input, and/or a written input. The at least one input includes a trip initiation point, a vehicle identifier, a departure time, a departure location, a destination location, a language selection, a modification, a confirmation, a navigation, a feedback, an emergency, a trip cancellation, and others.

In accordance with an embodiment of the present invention, the at least one input is provided either directly by the user device 112 or a switching means that is any one of a switch, a push button, a cluster placed on a vehicle 102.

In accordance with an exemplary embodiment of the present invention, the user device 112 is any one or a combination of a desktop computer, a laptop computer, a user computer, a tablet computer, a personal digital assistant (PDA), a cellular telephone, a communication unit appliance, a camera, a smartphone, an enhanced general packet radio service (EGPRS) mobile phone, a media player, a navigation device, an email device.

Furthermore, the user device 112 may be provided access to and/or receive application software executed and/or stored on any of the server 110. Further, the server 110 is a remote server or a local server. Further, the remote server is a cloud server.

In accordance with an embodiment of the present invention, the processing unit 104 processes the at least one input to extract a plurality of information of the trip. Further, the communication unit 108 transmits the extracted plurality of information to the server 110 for creating a trip record.

In accordance with an embodiment of the present invention, the user device 112 further allows the user to confirm or modify the at least one input before finalizing the trip record creation on the server 110. Further, the communication unit 108 is configured to automatically communicate the at least one input from a telematics unit to the server 110.

In accordance with an embodiment of the present invention, the server 110 generates an output data corresponding to the trip record. Further, the communication unit 108 transmits the generated output data to the vehicle 102 associated with the trip via the communication unit 108.

In accordance with an embodiment of the present invention, the output data corresponding to the trip record includes a plurality of routes and their maps, a user details, a vehicle details, type of a plurality of goods placed inside the vehicle 102, a plurality of destination points information, and others.

In accordance with an embodiment of the present invention, the processing unit 104 is connected to the server 110 through the communication unit 108 that is any one of a wired-communication unit and/or a wireless communication unit.

In some examples, the user device 112 performs functions of a social communication unit (not shown) to the cloud server. In some implementations, the user device 112 may communicate wirelessly through the communication unit 108.

In one embodiment, the communication unit 108 is configured to allow communication between the processing unit 104, and the switching means. In particular, the communication unit 108 may any communication unit 108, such as, but not limited to, the Internet, wireless networks, local area networks, wide area networks, private networks, a cellular communication unit, corporate network having one or more wireless access points or a combination thereof connecting any number of mobile clients, fixed clients, and servers 110 and so forth. Examples of communication unit 108 may include the Internet, a WIFI connection, a Bluetooth connection, a Zigbee connection, a communication network, a wireless communication unit, a 3G communication, network, a 4G communication unit, a 5G communication unit, a USB connection, or any combination thereof. For example, the communication may be based on a radio-frequency transceiver (not shown). In addition, short-range communication may occur, such as using Bluetooth, Wi-Fi, or other such transceivers.

In accordance with an embodiment of the present invention, the system 100 further provides an option of selecting a preferred language for communication with the user so that the voice input is received and processed in the preferred language.

In accordance with an embodiment of the present invention, the processing unit 104 adapts its voice recognition capabilities based on a plurality of historical data of the user preferences and speech patterns. The plurality of historical data is stored in a storage unit 106 that is configured with the processing unit 104.

In an another implementation, the system 100 further gathering a plurality of gesture information from the picture or video input of the user by the camera and extract the plurality of information of the trip. The plurality of gesture information is recognized by a gesture recognition module (not shown in the figures) of the processing unit 104. In this gesture recognition process of the gesture recognition module, relevant features from the images or videos are extracted via a real-time image processing and used the same to detect hand positions, movements, or other gesture indicators for final extraction of the plurality of information of the trip using several known techniques. For these purposes, the system 100 may involves defining which gestures correspond to which actions and ensuring the system 100 responds correctly to extract the plurality of information of the trip based on the recognized gestures. The processing unit 104 might use existing libraries or frameworks like TensorFlow, PyTorch, or OpenCV etc.

In accordance with another implementation embodiment, the user may provide the picture input of a digitally printed or a handwritten paper slip. The system 100 may extract the plurality of information of the trip from the picture of the digitally printed or the handwritten paper slip such as initiation point of the trip, final destination of the trip, specific route using one or more pickup points etc.

In accordance with another implementation embodiment, the user may provide the written input via a SMS or a text message using the user device. The system 100 may parse the content of the received SMS message and use the parsed information to determine the plurality of information's, such as the starting point or ending point of the trip.

In accordance with an embodiment of the present invention, the server 110 further analyzes the plurality of historical data to predict potential delays or an alternative route for the current trip.

Furthermore, the processing unit 104 is configured to execute one or more steps interpreted as an algorithm structure. Further, the storage unit 106 includes a memory that stores algorithm steps and the processing unit 104 executes the algorithm steps to perform one or more processes of the system 100 and method 300 in accordance with various exemplary embodiments of the present disclosure.

The storage unit 106 according to exemplary embodiments of the present disclosure may be implemented through a nonvolatile memory configured to store algorithms for controlling the operation of various components of the vehicle 102 or data about software commands for executing the algorithms, and the processing unit 104 configured to perform operation to be described above using the data stored in the storage unit 106. The storage unit 106 and the processing unit 104 may be individual chips.

Alternatively, the storage unit 106 and the processing unit 104 may be integrated in a single chip. The processing unit 104 may be implemented as one or more processors. The processing unit 104 may include various logic circuits and operation circuits, may process data according to a program provided from the storage unit 106, and may generate a control signal according to the processing result.

The processing unit 104 is operated by a predetermined program which may include a series of commands for carrying out the system 100 and method 300 included in the aforementioned various exemplary embodiments of the present disclosure.

The aforementioned invention may also be embodied as computer-readable codes on a computer-readable recording medium. The computer-readable recording medium is any data storage device that can store data which may be thereafter read by a computer system and store and execute program instructions which may be thereafter read by a computer system.

Examples of the computer-readable recording medium include Hard Disk Drive (HDD), solid state disk (SSD), silicon disk drive (SDD), read-only memory (ROM), random-access memory (RAM), flash memory, CD-ROMs, magnetic tapes, floppy discs, optical data storage devices, etc and implementation as carrier waves (e.g., transmission over the Internet). Examples of the program instruction include machine language code such as those generated by a compiler, as well as high-level language code which may be executed by a computer using an interpreter or the like.

In various exemplary embodiments of the present disclosure, the processing unit 104 may be implemented in a form of hardware or software or may be implemented in a combination of hardware and software.

In various exemplary embodiments of the present disclosure, the processing unit 104 may also include one or more input/output ("I/O") ports (e.g., serial ports, (e.g., RS233 port, USB, etc.) (not shown) and one or more network interfaces. The I/O port or ports may be operable to communicate with input/output devices, such as an internal and/or external display, keypad, mouse, pointing device, control panel, touch screen display, another computer-based device, printer, remote control, microphone, speaker, etc., which facilitates user interaction with the processing unit 104.

Furthermore, the terms such as "unit", "module", etc. included in the specification mean units for processing at least one function or operation, which may be implemented by hardware, software, or a combination thereof.

In accordance with another exemplary alternative embodiment of the present invention, the vehicle 102 is generally equipped with the IoT which may or may not be integrated with the processing unit 104.

In another alternative embodiment, the IoT is internally connected with a GSM (Global System for mobile communication) and network modules, allowing it to send notifications to the user device 112.

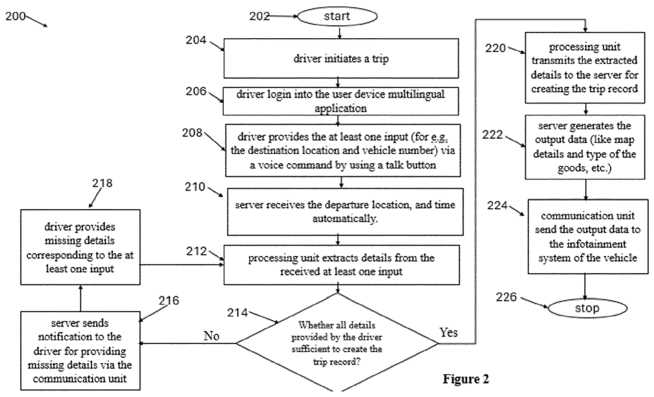

Fig. 2 is a flowchart 200 illustrating a method for automatically creating the trip record based on the at least one input provided by a driver, according to an exemplary embodiment of the present invention. The flowchart 200 starts at step 202, and proceeds to step 204, 206, 208, 210, 212, 214, 216, 218, 220, 222, 224, and 226.

The method is first operative at step 202.

At step 204, the driver is initiating the trip.

At step 206, the driver logs into a user device multilingual application. In one embodiment, the user device multilingual application is a mobile application that provides the option of selecting the preferred language for communication with the driver so that the voice input is received and processed in the preferred language.

At step 208, the driver provides the at least one input (for e.g. the destination location and vehicle number) via a voice command by using a talk button (switching means).

At step 210, the server 110 receives some information such as the departure location, departure date, and time automatically from the telematics unit.

At step 212, the processing unit 104 extracts details from the received at least one input.

At step 214, a determination is made whether all details provided by the driver are sufficient to create the trip record, when the determination is "YES", then the flowchart 200 proceeds to step 220 otherwise the flowchart 200 proceeds to step 216.

At step 216, the server 110 sends notification to the driver for providing missing details via the communication unit 108.

At step 218, the driver provides missing details corresponding to the at least one input. Further, the flowchart proceeds to step 212.

At step 220, the processing unit 104 transmits the extracted details to the server 110 for creating the trip record.

At step 222, the server 110 generates the output data (like map details and type of the goods, etc.) based on the received extracted details.

At step 224, the communication unit 108 send the output data to the infotainment system of the vehicle 102 to notify the driver about all the details regarding the trip.

At step 226, the method is terminated.

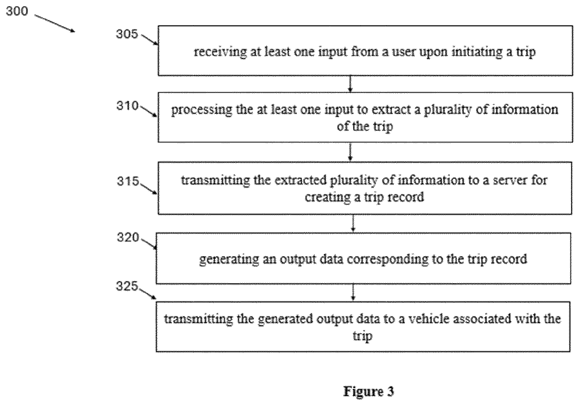

Fig. 3 is a flow chart illustrating a method 300 for automated trip management, according to another embodiment of the present invention. The method 300 includes a user device 112, a processing unit 104, a communication unit 108, and a server 110 to perform multiple steps. The method 300 starts at step 305 and proceeds to steps 310, 315, 320, and 325.

The method 300 is first operative at step 305 in which the user device 112 receives at least one input from a user upon initiating a trip.

In accordance with an embodiment of the present invention, the at least one input is anyone of a voice input, a video, a picture input, and/or a written input. The at least one input includes a trip initiation point, a vehicle identifier, a departure time, a departure location, a destination location, a language selection, a modification, a confirmation, a navigation, a feedback, an emergency, a trip cancellation, and others.

In accordance with an embodiment of the present invention, the at least one input is provided either directly by the user device 112 or a switching means that is any one of a switch, a push button, a cluster placed on a vehicle 102.

At step 310, the processing unit 104 processes the at least one input to extract a plurality of information of the trip.

At step 315, the communication unit 108 transmits the extracted plurality of information to the server 110 for creating a trip record.

In accordance with an embodiment of the present invention, the user device 112 further allows the user to confirm or modify the at least one input before finalizing the trip record creation on the server 110. Further, the communication unit 108 is configured to automatically communicate the at least one input from a telematics unit to the server 110.

In one embodiment, the telematics unit is installed in the vehicle 102 and collects data related to vehicles, machinery, or other assets. For e.g., the include GPS location, the vehicle speed, or engine diagnostics. The telematics unit gathers this information through various sensors and onboard systems and transmits it to the server 110 of the vehicle. It often includes hardware and software for communication purposes. Further, the server 110 is a centralized system where data from multiple telematics units is received, processed, stored, and analyzed. It may be located on-premises or hosted in the cloud, and it provides access to the collected data through user interfaces or APIs.

At step 320, the server 110 generates an output data corresponding to the trip record.

In accordance with an embodiment of the present invention, the output data corresponding to the trip record includes a plurality of routes and their maps, a user details, a vehicle details, type of a plurality of goods placed inside the vehicle 102, a plurality of destination points information, and others.

At step 325, the communication unit 108 transmits the generated output data to the vehicle 102 associated with the trip.

In accordance with an embodiment of the present invention, the generated output is received by the vehicle 102 in its infotainment module includes a navigation unit, a display unit, an entertainment unit, and among others.

In accordance with an embodiment of the present invention, the processing unit 104 is connected to the server 110 through the communication unit 108 that is any one of a wired-communication unit and/or a wireless communication unit.

In accordance with an embodiment of the present invention, the processing unit 104 adapts its voice recognition capabilities based on a plurality of historical data of the user preferences and speech patterns. The plurality of historical data is stored in a storage unit 106 that is configured with the processing unit 104.

In accordance with an embodiment of the present invention, the server 110 further analyzes the plurality of historical data to predict potential delays or an alternative route for the current trip.

In accordance with another exemplary embodiment of the present invention, the user schedules a ride using a smartphone app for the trip to the airport. Firstly, the user opens their smartphone application (app) and initiates a ride request. Further, The user provides details such as "Pick me up from 123 Elm Street at 3 PM and drop me off at XYZ Airport." The app processes this input, extracting key trip information such as pickup location, departure time, and destination by using the processing unit 104.

In accordance with an above embodiment, this extracted information is transmitted to the server 110. The server 110 creates the trip record, determines the best route based on current traffic conditions, and generates output data, including estimated arrival times and route details. The driver's vehicle 102 receives this data, updating the in-car navigation system with the route to the airport and estimated arrival time. In this way, the user experiences a streamlined trip initiation process, and the driver receives precise route and timing information, ensuring an efficient trip to the airport.

In accordance with another exemplary embodiment of the present invention, is when a logistics company coordinates deliveries for its fleet of trucks. A fleet manager enters details for multiple delivery routes. The fleet manager inputs data such as "Deliver to 456 Oak Avenue, Pickup from 789 Pine Road, Departure at 10 AM, includes all stops and special instructions." The processing input 104 processes this input to extract delivery points, special instructions, and timings. Further, the processed data is sent to the server 110. The server 110 generates optimized delivery routes for each truck, considering factors like traffic and delivery priorities.

In accordance with the above embodiment, each truck's infotainment system receives these details, providing turn-by-turn navigation and real-time traffic updates on the truck's display. In this way, the delivery routes are optimized for efficiency, and drivers receive real-time navigation and updates, improving delivery accuracy and timeliness.

In accordance with an advantageous embodiment of the present invention, the system 100 helps in creating the output data from a trip record by using the extracted plurality of information to improve a user's enjoyment of a trip. Further, the system 100 transmits the generated output data to the vehicle's infotainment system, integrating navigation, display, and entertainment functions for a cohesive user experience.

In accordance with an advantageous embodiment of the present invention, the system 100 also provides an option for adapt voice recognition capabilities based on a plurality of historical user data, enhancing interaction and accuracy. Further, the system 100 enables the server 110 to analyze the plurality of historical data and predict potential delays or suggest alternative routes, improving trip efficiency and responsiveness.

The present system 100 offers the added benefit of being usable with any population, overcoming language barriers as it provides an option for language selection. This is particularly important since most drivers worldwide communicate in their native languages and may not be comfortable with other languages. As a result, system 100 provides a comprehensive solution that enables easy audio-based trip planning with minimal input such as destination location and vehicle number.

In response to these challenges, there has been a growing interest in developing automated trip management systems that leverage advanced technologies to streamline trip planning and execution. These systems 100 aim to automate the process of collecting and processing trip information, reducing manual input and enhancing overall trip management efficiency. By integrating various input methods, such as voice commands and multimedia, and providing real-time updates and personalized recommendations, automated trip management systems 100 offer a more seamless and user-friendly experience.

While the detailed description has shown, described, and pointed out novel features as applied to various alternatives, it can be understood that various omissions, substitutions, and changes in the form and details of the devices or algorithms illustrated can be made without departing from the scope of the disclosure. As can be recognized, certain alternatives described herein can be embodied within a form that does not provide all of the features and benefits set forth herein, as some features can be used or practiced separately from others.

The disclosures and the description herein are intended to be illustrative and are not in any sense limiting the invention, defined in scope by the following claims.

### ELEMENT LIST

| **COMPONENT** | **REFERENCE NUMBER** |
|---|---|
| System | 100 |
| Vehicle | 102 |
| Processing Unit | 104 |
| Storage Unit | 106 |
| Communication Unit | 108 |
| Server | 110 |
| User device | 112 |

## Claims

1. A method for automated trip management, comprising:
receiving, by a user device 112, at least one input from a user upon initiating a trip;
processing, by a processing unit 104, the at least one input to extract a plurality of information of the trip;
transmitting, by a communication unit 108, the extracted plurality of information to a server 110 for creating a trip record;
generating, by the server 110, an output data corresponding to the trip record; and
transmitting, by the communication unit 108, the generated output data to a vehicle 102 associated with the trip.

2. The method 300 as claimed in claim 1, wherein the at least one input is anyone of a voice input, a video, a picture input, and/or a written input.

3. The method 300 as claimed in claim 1, wherein the at least one input includes a trip initiation point, a vehicle identifier, a departure time, a departure location, a destination location, a language selection, a modification, a confirmation, a navigation, a feedback, an emergency, a trip cancellation, and others.

4. The method 300 as claimed in claim 3, wherein the communication unit 108 further configured to automatically communicate the at least one input from a telematics unit to the server 110.

5. The method 300 as claimed in claims 1,2 & 3, wherein the at least one input is provided either directly by the user device 112 or a switching means that is any one of a switch, a push button, a cluster placed on the vehicle 102.

6. The method 300 as claimed in claim 1, wherein the output data corresponding to the trip record includes a plurality of routes and their maps, a user details, a vehicle details, type of a plurality of goods placed inside the vehicle 102, a plurality of destination points information, and others.

7. The method 300 as claimed in claim 1, wherein the method 300 further provides an option of selecting a preferred language for communication with the user so that the voice input is received and processed in the preferred language.

8. The method 300 as claimed in claim 1, wherein the method 300 further gathering a plurality of gesture information from the picture input or the video input of the user to extract the plurality of information of the trip.

9. The method 300 as claimed in claim 1, wherein the generated output is received by the vehicle 102 in its infotainment module includes a navigation unit, a display unit, an entertainment unit, and among others.

10. The method 300 as claimed in claim 1, wherein the processing unit 104 adapts its voice recognition capabilities based on a plurality of historical data of the user preferences and speech patterns.

11. The method 300 as claimed in claim 1, wherein the user device 112 further allows the user to confirm or modify the at least one input before finalizing the trip record creation on the server 110.

12. The method 300 as claimed in claim 1, wherein the server 110 further analyzes the plurality of historical data to predict potential delays or an alternative route for the current trip.

13. A system for automated trip management, comprising:
a user device 112, configured to receive at least one input from a user upon initiating a trip;
a processing unit 104 processes the at least one input to extract a plurality of information of the trip;
a communication unit 108 configured to:
transmit the extracted plurality of information to a server 110 for creating a trip record, wherein the server 110 generates an output data corresponding to the trip record; and
transmit the generated output data to a vehicle 102 associated with the trip.
